# EUROPEAN PATENT APPLICATION

(11) **EP 4 550 231 A1**
(43) Date of publication of application: **07.05.2025**
(21) Application number: 24209711.1
(22) Date of filing: 30.10.2024
(51) Int. Cl.: G06Q 10/04

(54) **EVALUATING SYSTEM OF PAPER MANUFACTURING AND EVALUATING METHOD OF PAPER MANUFACTURING**

(30) Priority: 02.11.2023 TW 112142322
(71) Applicant: Yuen Foong Yu Consumer Products Co., Ltd., Taipei City (TW)
(72) Inventor: CHANG, Ching Ho, TAIPEI CITY (TW); CHEN, Shih Sheng, TAIPEI CITY (TW); TSENG, Pin Sin, TAIPEI CITY (TW); HUNG, Ju-Chen, TAIPEI CITY (TW)
(74) Representative: Vossius & Partner Patentanwälte Rechtsanwälte mbB

(57) **Abstract**

An evaluating system of paper manufacturing includes an evaluation apparatus of paper manufacturing and a fiber analysis device. The evaluation apparatus of paper manufacturing includes a database, an input unit, a processing unit, and a communication interface. The database stores a plurality of paper manufacturing parameters, a paper manufacturing corresponding function, and a paper forming corresponding function. The input unit is configured to receive an input related to the paper manufacturing parameters. The processing unit is electrically connected to the database and is configured to generate a suggested manufacturing recipe by using the paper forming corresponding function and the paper manufacturing corresponding function according to the input. The fiber analysis device is electrically or communicatively connected to the evaluation apparatus of paper manufacturing. The fiber analysis device is configured to analyze one or more fiber materials, a single-layer paper, and a paper product.

## Description

### BACKGROUND

### Field of Invention

The present invention relates to an evaluating system of paper manufacturing and an evaluating method of paper manufacturing.

### Description of Related Art

People still have strong demand for paper products (e.g., facial tissue or tissue). Therefore, there are currently a variety of paper products on the market for consumers to choose from. In order to meet consumer demand, each manufacturer of paper products has its own paper product manufacturing recipe.

However, at present, the paper product manufacturing recipes designed by various manufacturers of paper products for a specific consumer demand still tend to be single and fixed. In order to respond to the diverse needs of consumers, it is necessary to have evaluation instruments that can customize paper product manufacturing recipes for various needs, so as to facilitate the manufacture of paper products that can meet more specific consumer needs.

Therefore, how to propose an evaluating system of paper manufacturing and an evaluating method of paper manufacturing that can improve the aforementioned problem is one of the problems that the industry urgently wants to invest in research and development resources to solve.

### SUMMARY

In view of this, one purpose of the present disclosure is to provide an evaluating system of paper manufacturing and an evaluating method of paper manufacturing that can solve the aforementioned problems.

In order to achieve the above objective, in accordance with an embodiment of the present disclosure, an evaluating system of paper manufacturing includes an evaluation apparatus of paper manufacturing and a fiber analysis device. The evaluation apparatus of paper manufacturing includes a database, an input unit, a processing unit, and a communication interface. The database stores a plurality of paper manufacturing parameters, a paper manufacturing corresponding function, and a paper forming corresponding function. The input unit is communicatively connected to the database and is configured to receive an input related to the paper manufacturing parameters. The processing unit is electrically connected to the database and is configured to generate a suggested manufacturing recipe by using the paper forming corresponding function and the paper manufacturing corresponding function according to the input. The communication interface is communicatively connected to the input unit and the processing unit. The fiber analysis device is electrically or communicatively connected to the evaluation apparatus of paper manufacturing and is configured to analyze one or more fiber materials, a single-layer paper, and a paper product.

In one or more embodiments of the present disclosure, the processing unit is further configured to: receive an analysis result from the fiber analysis device analyzing one or more fiber materials and a single-layer paper composed of the one or more fiber materials; update the paper forming corresponding function according to the analysis result; receive an analysis result from the fiber analysis device analyzing a paper product composed of the one or more fiber materials; and update the paper manufacturing corresponding function according to the analysis result.

In one or more embodiments of the present disclosure, the evaluation apparatus of paper manufacturing further includes a display unit electrically connected to the input unit and configured to display a user interface.

In one or more embodiments of the present disclosure, the display unit is configured to display the paper manufacturing parameters on the user interface.

In one or more embodiments of the present disclosure, the processing unit is further configured to: perform a calculation on the input related to the paper manufacturing parameters, the paper forming corresponding function, and the paper manufacturing corresponding function.

In one or more embodiments of the present disclosure, the calculation enables the processing unit to generate the suggested manufacturing recipe based on the input, the paper forming corresponding function, and the paper manufacturing corresponding function.

In one or more embodiments of the present disclosure, the processing unit is further configured to: display the suggested manufacturing recipe via the display unit after the calculation is performed.

In one or more embodiments of the present disclosure, the processing unit controls the display unit to display the suggested manufacturing recipe by the communication interface.

In order to achieve the above objective, in accordance with an embodiment of the present disclosure, an evaluating method of paper manufacturing includes: analyzing one or more fiber materials by using a fiber analysis device to generate an analysis result, wherein the analysis result is related to a plurality of paper manufacturing parameters, and the paper manufacturing parameters includes a paper product type, a paper product predetermined property, and a fiber type; performing a first calculation on the analysis result and a paper manufacturing corresponding function to generate a paper manufacturing qualified score criteria, wherein the paper manufacturing corresponding function includes a functional relationship between the analysis result and the paper manufacturing parameters; updating the paper manufacturing corresponding function according to the analysis result; performing a second calculation on an input related to the paper manufacturing parameters and the paper manufacturing corresponding function to generate a paper manufacturing score; and determining whether the paper manufacturing score is in the paper manufacturing qualified score criteria.

In one or more embodiments of the present disclosure, determining whether the paper manufacturing score is in the paper manufacturing qualified score criteria further includes: generating a suggested manufacturing recipe based on the paper manufacturing score if the paper manufacturing score is determined to be in the paper manufacturing qualified score criteria.

In one or more embodiments of the present disclosure, determining whether the paper manufacturing score is in the paper manufacturing qualified score criteria further includes: issuing an error reminder if the paper manufacturing score is determined not to be in the paper manufacturing qualified score criteria.

In one or more embodiments of the present disclosure, the analysis result includes a plurality of fiber parameters related to the one or more fiber materials.

In one or more embodiments of the present disclosure, the paper manufacturing qualified score criteria are weighted scores, and the paper manufacturing corresponding function includes a plurality of weights corresponding to the fiber parameters.

In one or more embodiments of the present disclosure, the evaluating method of paper manufacturing further includes: analyzing one or more paper products by using the fiber analysis device to obtain paper product physical property data and paper product chemical property data; and updating the paper manufacturing corresponding function according to the paper product physical property data and the paper product chemical property data.

In one or more embodiments of the present disclosure, the evaluating method of paper manufacturing further includes: performing a third calculation on the analysis result and a paper forming corresponding function to generate a paper formation qualified score criteria, wherein the paper forming corresponding function includes a functional relationship between the analysis result and the paper manufacturing parameters, and the paper manufacturing parameters further include a single-layer paper predetermined property; updating the paper forming corresponding function according to the analysis result; performing a fourth calculation on an input related to the paper manufacturing parameters and the paper forming corresponding function to generate a paper formation score; and determining whether the paper formation score is in the paper formation qualified score criteria.

In one or more embodiments of the present disclosure, determining whether the paper formation score is in the paper formation qualified score criteria further includes: performing the first calculation on the analysis result and the paper manufacturing corresponding function to generate a paper manufacturing qualified score criteria if the paper formation score is determined to be in the paper formation qualified score criteria.

In one or more embodiments of the present disclosure, determining whether the paper formation score is in the paper formation qualified score criteria further includes: issuing an error reminder if the paper formation score is determined not to be in the paper formation qualified score criteria.

In one or more embodiments of the present disclosure, the evaluating method of paper manufacturing further includes: analyzing one or more single-layer papers by using the fiber analysis device to obtain a single-layer paper physical property data and a single-layer paper chemical property data; and updating the paper forming corresponding function according to the single-layer paper physical property data and the single-layer paper chemical property data.

In one or more embodiments of the present disclosure, the analysis result includes a plurality of fiber parameters related to the one or more fiber materials.

In one or more embodiments of the present disclosure, the paper formation qualified score criteria are weighted scores, and the paper forming corresponding function includes a plurality of weights corresponding to the fiber parameters.

In summary, in the evaluating system of paper manufacturing and the evaluating method of paper manufacturing, the manufacturer can select the product property of the products to be produced by the evaluation apparatus of paper manufacturing, thereby obtaining the suggested manufacturing recipe for manufacturing the products to be produced. In addition, in the evaluating system of paper manufacturing and the evaluating method of paper manufacturing of the present disclosure, the manufacturer can update the paper forming corresponding function and paper manufacturing corresponding function by utilizing the analysis result of the fiber materials, the single-layer paper, and the paper product from the fiber analysis device, thus providing the manufacturer with more appropriate suggested manufacturing recipe.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a functional block diagram of an evaluating system of paper manufacturing in accordance with an embodiment of the present disclosure;
Fig. 2 is a functional block diagram of the evaluation apparatus of paper manufacturing in accordance with an embodiment of the present disclosure;
Fig. 3 is a functional block diagram of the cooperative operation of the evaluation apparatus of paper manufacturing and the fiber analysis device in accordance with an embodiment of the present disclosure; and
Fig. 4 is a flow chart of an evaluating method of paper manufacturing in accordance with an embodiment of the present disclosure.

### DETAILED DESCRIPTION

Hereinafter, a plurality of embodiments of the present disclosure will be disclosed in diagrams. For the sake of clarity, many details in practice will be described in the following description. However, it should be understood that these details in practice should not limit present disclosure. In other words, in some embodiments of present disclosure, these details in practice are unnecessary. In addition, for simplicity of the drawings, some conventionally used structures and elements will be shown in a simple schematic manner in the drawings. The same reference numbers are used in the drawings and the description to refer to the same or like parts.

Hereinafter, the structure and function of each component included in an evaluating system of paper manufacturing PMES of this embodiment and the connection relationship between the components will be described in detail.

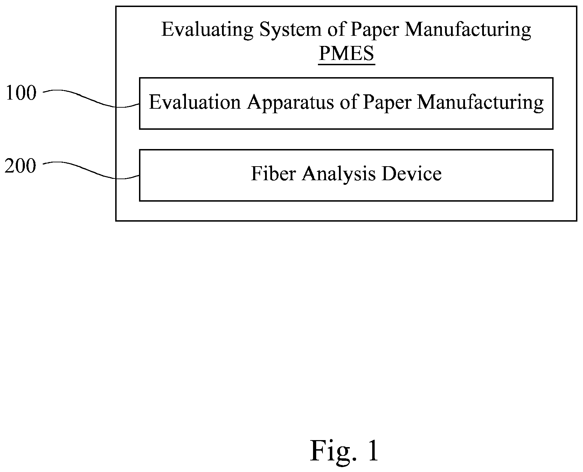

Reference is made to Fig. 1. Fig. 1 is a functional block diagram of an evaluating system of paper manufacturing PMES in accordance with an embodiment of the present disclosure. The evaluating system of paper manufacturing PMES of the present disclosure is configured to obtain a suggested manufacturing recipe for manufacturing paper products. As shown in Fig. 1, the evaluating system of paper manufacturing PMES includes an evaluation apparatus of paper manufacturing 100 and a fiber analysis device 200. The fiber analysis device 200 is configured to perform analysis on fiber materials and the paper products composed of the fiber materials. The evaluation apparatus of paper manufacturing 100 is electrically or communicatively connected to the fiber analysis device 200. The evaluation apparatus of paper manufacturing 100 is configured to perform calculations on the data obtained by analyzing paper and its composition by the fiber analysis device 200 to obtain the suggested manufacturing recipe for manufacturing the paper product.

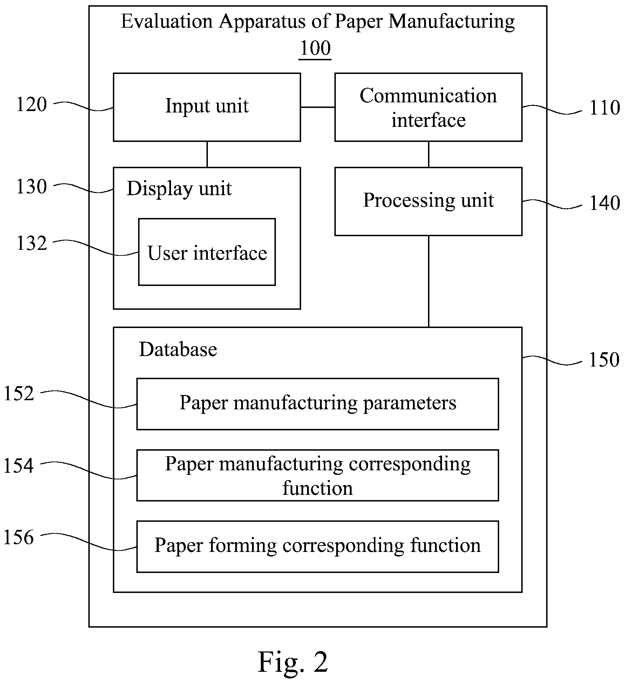

Reference is made to Fig. 2. Fig. 2 is a functional block diagram of the evaluation apparatus of paper manufacturing 100 in accordance with an embodiment of the present disclosure. As shown in Fig. 2, in this embodiment, the evaluation apparatus of paper manufacturing 100 includes a communication interface 110, an input unit 120, a display unit 130, a processing unit 140, and a database 150. The communication interface 110 is configured to communicate with the input unit 120, the display unit 130, the processing unit 140, and the database 150. In other words, the input unit 120, the display unit 130, the processing unit 140, and the database 150 may be communicatively connected to each other via the communication interface 110. The input unit 120 is electrically connected to the display unit 130. The display unit 130 is configured to display a user interface 132. The processing unit 140 is electrically connected to the database 150. The database 150 stores several paper manufacturing parameters 152, a paper manufacturing corresponding function 154, and a paper forming corresponding function 156.

Reference is made again to Fig. 2. The input unit 120 is configured to receive an input related to the paper manufacturing parameters 152 and send an instruction of the input related to the paper manufacturing parameters 152. The display unit 130 is configured to display the paper manufacturing parameters 152 on the user interface 132. The processing unit 140 is configured to generate the suggested manufacturing recipe based on the input related to the paper manufacturing parameters 152 using the paper manufacturing corresponding function 154 and the paper forming corresponding function 156. In detail, the processing unit 140 is further configured to receive the instruction of the input related to the paper manufacturing parameters 152. Wherein, the instruction causes the processing unit 140 to perform calculations on the input of the paper manufacturing parameters 152 with the paper manufacturing corresponding function 154 and the paper forming corresponding function 156. This instruction also enables the processing unit 140 to correspondingly generate the suggested manufacturing recipe based on the calculations. In addition, the processing unit 140 is configured to display the suggested manufacturing recipe by the display unit 130 after performing the calculations.

By the aforementioned structural configuration, when the input unit 120 receives the input related to the paper manufacturing parameters 152, the input unit 120 may send the instruction of the input related to the paper manufacturing parameters 152 to the processing unit 140. After the processing unit 140 receives the instruction of the input related to the paper manufacturing parameters 152, the processing unit 140 may perform calculations based on the input related to the paper manufacturing parameters 152 and the paper manufacturing corresponding function 154, and the processing unit 140 will correspondingly generate the suggested manufacturing recipe based on the calculations. Specifically, after the processing unit 140 performs the calculations, the processing unit 140 can control the display unit 130 to display the suggested manufacturing recipe by the communication interface 110.

In some embodiments, the paper manufacturing parameters 152 may include, but are not limited to, paper product type (e.g., facial tissue, tissue, or other possible paper product types) and/or its predetermined property (e.g., softness of facial tissue or tissue, number of layers (single layer or multiple layers), bulk, smoothness, basis weight, or other possible predetermined properties) as well as a plurality of fiber parameters related to the fiber materials. The aforementioned fiber parameters include fiber type (e.g., long fiber, short fiber, or other possible fiber types) and their physical property data (e.g., length, width, weight, thickness, coarseness, fibrillation, Length/weight ratio (L/W Ratio), and length/thickness ratio (L/T Ratio)). In other words, the present disclosure is not intended to limit the aforementioned paper manufacturing parameters 152 related to physical properties of the paper product.

In some embodiments, the paper manufacturing parameters 152 may also include, but are not limited to, types of chemical composition (e.g., softeners, perfumes, or other possible types of chemical composition) and their physical property data (e.g., fragrance of softeners or perfume or other possible physical property data), and the paper product type (e.g., kitchen towel, tissue, facial tissue, paper towel, or other possible paper product types) and/or its predetermined property (e.g., fragrance, oil absorbency, water absorbency, softness, smoothness, strength, bulk or other possible predetermined properties). In other words, the present disclosure is not intended to limit the aforementioned paper manufacturing parameters 152 related to the chemical composition and physical property data of the paper product.

In some embodiments, the paper manufacturing corresponding function 154 includes the aforementioned paper product type (e.g., facial tissue, tissue, or other possible paper product types) and/or its predetermined property (e.g., softness of facial tissue or tissue, number of layers (single layer or multiple layers), bulk, smoothness, basis weight, or other possible predetermined property) and fiber type (e.g., long fiber, short fiber, or other possible fiber types) and their physical property data (e.g., length, width, weight, or other possible physical property data).

In some embodiments, the paper manufacturing corresponding function 154 may also include the aforementioned types of the chemical composition (e.g., softeners, perfumes, or other possible types of chemical composition) and their physical property data (e.g., fragrance of softeners or perfume or other possible physical property data) and the paper product type (e.g., facial tissue, tissue or other possible paper types) and/or its predetermined property (e.g., the fragrance of facial tissue or tissue or other possible predetermined property).

In some embodiments, a person having ordinary skills in the field of paper product manufacturing can pre-write the known correspondence among the paper manufacturing parameters 152 into the paper manufacturing corresponding function 154. By way of example but not limitation, the correspondence among the paper manufacturing parameters 152 may be the paper pulp fiber type and its adding ratio.

In some embodiments, for example but not limitation, the suggested manufacturing recipe may be information on a fiber analysis result and a ratio of the long fiber to the short fiber. For example, the display unit 130 may display the suggested manufacturing recipe in the form of "100 wt% of a first fiber and 50 wt% of a second fiber".

In some embodiments, for example but not limitation, the display unit 130 may be a touch panel with a touch function to allow the user to touch the display unit 130, so that the input unit 120 can accordingly receive the input related to the paper manufacturing parameters 152.

In some embodiments, the user interface 132 displayed on the display unit 130 may include a plurality of options of the paper manufacturing parameters 152 for the user to select through touching. For example, the user interface 132 may include facial tissue, tissue, softness, single layer or multiple layers, bulk, smoothness, basis weight, long fiber, short fiber, fiber length, fiber width, fiber weight, softener, perfume, perfume fragrance, or other possible icons of button, drop-down menus, or checkboxes. The present disclosure is not intended to limit the number, type, and display style of the paper manufacturing parameters 152 included in the user interface 132.

In some embodiments, the evaluation apparatus of paper manufacturing 100 may not have the display unit 130. That is, the user can directly perform the input related to the paper manufacturing parameters 152 on the input unit 120. For example, the input unit 120 may be a computer keyboard, a numeric keyboard, a mouse, or a combination thereof, but the present disclosure is not intended to limit the type of input device of the input unit 120.

Next, a "first embodiment" of the detailed process in which the user obtains the suggested manufacturing recipe using the evaluating system of paper manufacturing PMES of the present disclosure will be described as follows. It should be noted that the "first embodiment" described below is only an example for simple explanation, and the present disclosure is not intended to limit thereto.

First of all, the user performs the input related to the paper manufacturing parameters 152 on the input unit 120. Specifically, the display unit 130 will display the paper manufacturing parameters 152 on the user interface 132, and each of the paper manufacturing parameters 152 can correspond to a key or a button located on the input unit 120. The user can select the paper manufacturing parameters 152 according to his or her personal preferences on the input unit 120. For example, if the user is eager to obtain a tissue that can be produced to have properties between the facial tissue and the tissue and have a rose fragrance, the user can select "tissue" on the input unit 120 from the menu of related paper types, and select "fiber content 75%", "moderate softness", "moderate smoothness", and "rose fragrance" from the menu of the predetermined property of the paper product on the input unit 120. Alternatively, in an embodiment in which the display unit 130 is a touch panel, the user can directly touch the display unit 130 to select according to his or her personal preference.

Next, the processing unit 140 substitutes the input related to the paper manufacturing parameters 152 from the user into the paper manufacturing corresponding function 154 to perform calculations. Specifically, after the processing unit 140 receives the instructions of the input from the input unit 120, the processing unit 140 substitutes the paper manufacturing parameters 152 of the input into the paper manufacturing corresponding function 154 and performs the calculations. For example, after the processing unit 140 substitutes "tissue", "fiber content 75%", "moderate softness", "moderate smoothness" and "rose fragrance", or other possible parameters into the paper manufacturing corresponding function 154, the processing unit 140 performs iterative calculations. More specifically, when the processing unit 140 processes the parameter "fiber content 75%", the processing unit 140 can find many feasible manufacturing recipes. For example, a recipe that can produce the paper products with predetermined property between facial tissue and tissue and having 75% fiber content may be "100 wt% long fiber and 50 wt% short fiber mixed at a weight percentage of 1:1" or "80 wt% long fiber and 60 wt% short fiber mixed in a weight percentage of 3:1". It should be noted that the present disclosure is not intended to limit the calculation algorithms, logic, programming languages, or other possible calculation methods used by the processing unit 140 in order to find numerous feasible manufacturing recipes.

Next, the processing unit 140 obtains the suggested manufacturing recipe through the calculations. Specifically, after obtaining a plurality of feasible manufacturing recipes in the previous step, the processing unit 140 selects one of the manufacturing recipes as the suggested manufacturing recipe. For example, in principle, the processing unit 140 will select the most executable solution among many feasible manufacturing recipes as the suggested manufacturing recipe. For example, among the two manufacturing recipes "100 wt% long fiber and 50 wt% short fiber mixed in a weight percentage of 1:1 + rose perfume (10 drops/1 liter)" and "80 wt% long fiber and 60 wt% short fiber mixed in a weight percentage of 3:1 + rose perfume (10 drops/1 liter)", the former manufacturing recipe is a relatively executable solution for paper manufacturers, so the processing unit 140 will choose the manufacturing recipe "100 wt% long fiber and 50 wt% short fiber mixed in a weight percentage of 1:1 + rose perfume (10 drops/1 liter)" as the suggested manufacturing recipe. It should be noted that the present disclosure is not intended to limit the calculation algorithms, logic, programming languages, or other possible calculation methods used by the processing unit 140 in order to derive the suggested manufacturing recipe.

Next, the processing unit 140 displays the suggested manufacturing recipe on the display unit 130. Specifically, after the processing unit 140 generates the suggested manufacturing recipe according to the input from the user, the suggested manufacturing recipe is displayed on the user interface 132 of the display unit 130 by the communication interface 110. For example, the processing unit 140 controls the user interface 132 by the communication interface 110 to display "100 wt% long fiber and 50 wt% short fiber mixed in a weight percentage of 1:1 + rose perfume (10 drops/1 liter)" or other possible wording.

By the aforementioned steps of the first embodiment, the user can use the evaluating system of paper manufacturing PMES of the present disclosure to obtain the suggested manufacturing recipe for manufacturing paper products that meet personal preferences thereof.

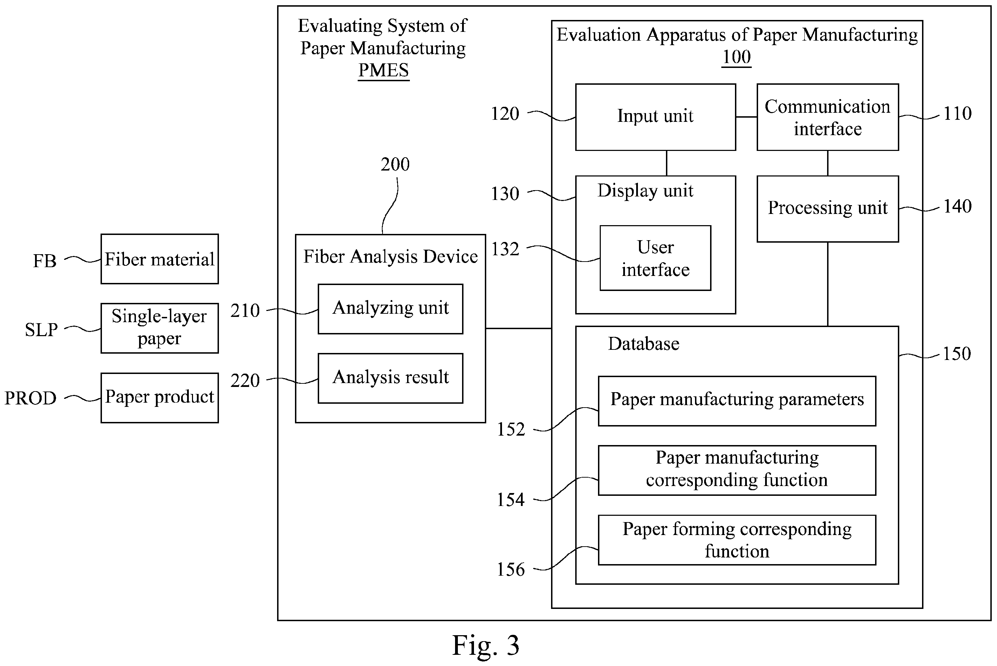

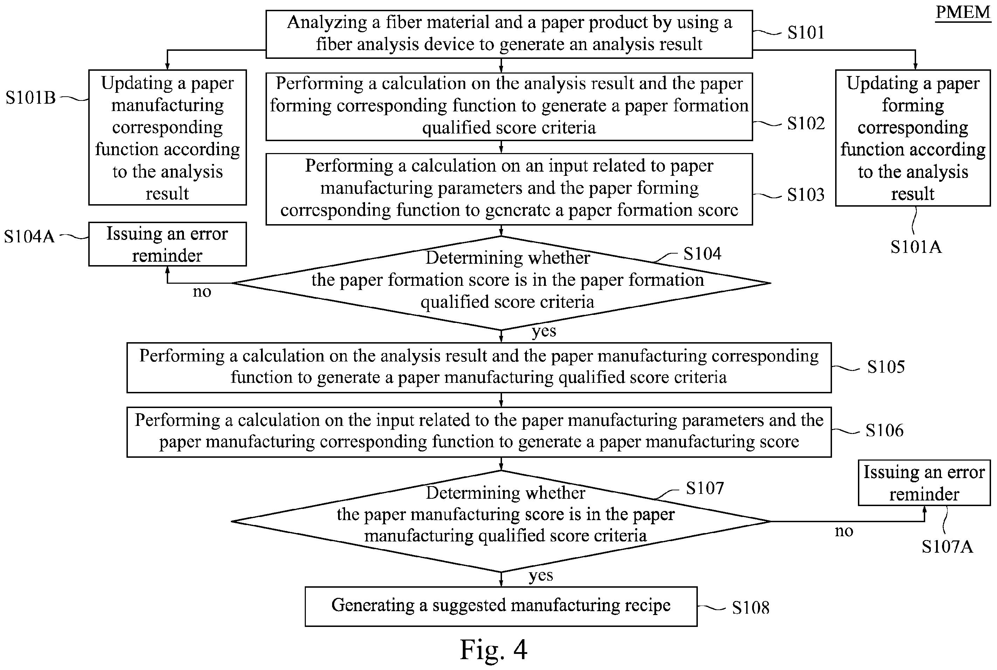

Next, a "second embodiment" of a detailed process in which the user obtains the suggested manufacturing recipe using the evaluating system of paper manufacturing PMES of the present disclosure will be described as follows. It should be noted that the "second embodiment" described below is only an example for simple explanation, and the present disclosure is not intended to limit thereto. Please refer to Fig. 3 and Fig. 4 for relevant description of the second embodiment.

Reference is made to Fig. 3. Fig. 3 is a functional block diagram of the cooperative operation of the evaluation apparatus of paper manufacturing 100 and the fiber analysis device 200 in accordance with an embodiment of the present disclosure. Specifically, the evaluation apparatus of paper manufacturing 100 of the present disclosure can be configured to cooperate with an external fiber analysis device 200 to obtain the suggested manufacturing recipe for manufacturing the paper products. In this embodiment, the structure of the evaluation apparatus of paper manufacturing 100 in Fig. 3 is substantially the same as the structure of the evaluation apparatus of paper manufacturing 100 in Fig. 2. However, the communication interface 110 in Fig. 3 is further configured to communicate with the fiber analysis device 200 and the evaluation apparatus of paper manufacturing 100.

The steps of the detailed process of the second embodiment are the same as those of the aforementioned first embodiment in principle, but the biggest difference between the two is that the processing unit 140 in the second embodiment can determine an analysis result 220 from analyzing a fiber materials FB, a single-layer paper SLP, and a paper product PROD by using the fiber analysis device 200, and update the paper manufacturing corresponding function 154 and the paper forming corresponding function 156 according to the analysis result 220, and then perform calculations to generate better suggested manufacturing recipes.

As shown in Fig. 3, the fiber analysis device 200 includes an analyzing unit 210. The analyzing unit 210 is configured to analyze the fiber material FB, the single-layer paper SLP, and the paper product PROD. The analyzing unit 210 is further configured to generate the analysis result 220 according to the analysis. Specifically, the single-layer paper SLP and the paper product PROD are formed from the fiber material FB, and the paper product PROD is substantially composed of the single-layer paper SLP or a plurality of single-layer papers SLP (that is, the paper product PROD includes multiple layers of paper). Generally speaking, the fiber material FB is priorly formed into the single-layer paper SLP to complete a paper formation step, and then one or more single-layer papers SLP are processed and manufactured to form the paper product PROD according to different consumer needs. In some embodiments, the fiber material FB may be analyzed by the analyzing unit 210 in the form of pulp. This means that the fiber analysis device 200 can not only perform analysis on fiber material FB, but also directly perform analysis on the single-layer paper SLP and the paper product PROD to obtain the analysis result 220 including, for example but not limited to, physical property data.

As shown in Fig. 3, the processing unit 140 is further configured to receive the analysis result 220 from analyzing the fiber material FB by the fiber analysis device 200, and is configured to update the paper forming corresponding function 156 according to the analysis result 220 from analyzing the fiber material FB. The processing unit 140 is further configured to receive the analysis result 220 from analyzing the single-layer paper SLP by the fiber analysis device 200, and is configured to update the paper forming corresponding function 156 according to the analysis result 220 from analyzing the single-layer paper SLP. The processing unit 140 is further configured to receive the analysis result 220 from analyzing the paper product PROD by the fiber analysis device 200, and is configured to update the paper manufacturing corresponding function 154 according to the analysis result 220 from analyzing the paper product PROD.

In some embodiments, both the paper manufacturing corresponding function 154 and the paper forming corresponding function 156 include the functional relationship between the analysis result 220 and the paper manufacturing parameters 152. In some embodiments, the processing unit 140 can calculate and generate the suggested manufacturing recipe through the principle of machine learning, where the machine learning can include unsupervised learning, semi-supervised learning, or supervised learning. Specifically, after the processing unit 140 substitutes the paper manufacturing parameters 152 from the user into the paper manufacturing corresponding function 154, it may execute, for example, a clustering algorithm to generate the suggested manufacturing recipe. More specifically, in this embodiment, the processing unit 140 not only updates the paper manufacturing corresponding function 154 and the paper forming corresponding function 156 by utilizing the result of the suggested manufacturing recipe generated by the input related to the paper manufacturing parameter 152 by each of the users in the past, but also updates the paper manufacturing corresponding function 154 and the paper forming corresponding function 156 by utilizing the analysis result 220 of the fiber material FB, the single-layer paper SLP, and the paper product PROD analyzed by the fiber analysis device 200. For example, in this embodiment, the fiber analysis device 200 can be used to analyze competing products on the market to obtain the analysis result 220. The analysis result 220 includes the fiber analysis result and the ratio of the long fiber to the short fiber of the competing products. Therefore, when the processing unit 140 processes the input related to the paper manufacturing parameters 152 from a "new" user, the suggested manufacturing recipe can be chose based on the aforementioned paper manufacturing corresponding function 154 that is constantly updated.

For example, a recipe that can produce the paper products with predetermined property between facial tissue and tissue, having rose fragrance, and having 75% fiber content may be "100 wt% long fiber and 50 wt% short fiber mixed in a weight percentage of 1:1 + rose perfume (10 drops/1 liter)" or "80 wt% long fiber and 60 wt% short fiber mixed in a weight percentage of 3:1 + rose perfume (10 drops/1 liter)", but when the processing unit 140 uses machine learning to process the input related to the paper manufacturing parameters 152 from the users in the past, the processing unit 140 classifying them into the group "100 wt% long fiber and 50 wt% short fiber mixed in the weight percentage of 1:1 + rose perfume (10 drops/1 liter)" the most often (i.e., the processing unit 140 has most frequently selected "100 wt% long fiber and 50 wt% short fiber mixed in a weight percentage of 1:1 + rose perfume (10 drops/1 liter)" as the suggested manufacturing recipe). Therefore, the processing unit 140 finally generates "100 wt% long fiber and 50 wt% short fiber mixed in the weight percentage of 1:1 + rose perfume (10 drops/1 liter)" as the suggested manufacturing recipe. The present disclosure is not intended to limit the algorithms, logic, programming languages used by the processing unit 140 in order to derive the suggested manufacturing recipe.

Next, the evaluating method of paper manufacturing PMEM of the present disclosure will be described in detail. The evaluating method of paper manufacturing PMEM includes a mechanism on how to update the paper manufacturing corresponding function 154 and the paper forming corresponding function 156 and a mechanism on how to determine whether there is a suggested manufacturing recipe based on the input related to the paper manufacturing parameters 152 from the user.

Reference is made to Fig. 4. Fig. 4 is a flow chart of an evaluating method of paper manufacturing PMEM in accordance with an embodiment of the present disclosure. In this embodiment, the evaluating method of paper manufacturing PMEM includes a step S101, a step S101A, a step S101B, a step S102, a step S103, a step S104, a step S104A, a step S105, a step S106, a step S107, a step S107A, and a step S108. Each of the aforementioned steps is explained in detail below.

Step S101: Analyzing the fiber material FB and the paper product PROD by using the fiber analysis device 200 to generate the analysis result 220.

In this embodiment, the analyzing unit 210 of the fiber analysis device 200 analyzes the fiber material FB and the paper product PROD to generate the analysis result 220. In some embodiments, the analyzing unit 210 of the fiber analysis device 200 also analyzes the single-layer paper SLP. The analysis result 220 obtained by the aforementioned analysis include a plurality of data related to the paper manufacturing parameters 152, and the aforementioned data related to the paper manufacturing parameters 152 are stored in the database 150. In some embodiments, the analysis result 220 includes a plurality of fiber parameters related to one or more fiber materials FB (e.g., length, width, weight, thickness, roughness, fibrillation, length/weight ratio (L/W ratio), length/thickness ratio (L/T ratio), fine grains ratio, kink, and other possible fiber parameters). In some embodiments, the data related to the paper manufacturing parameters 152 include physical property data of the single-layer paper SLP (e.g., fiber blending ratio, refining strength, wrinkle rate (creeping), lateral arrangement (J/W Value), specific gravity, toughness (tensile), thickness of the single-layer paper SLP measured by a caliper, and hand feeling, and other possible physical property data) and chemical property data. In some embodiments, the data related to the paper manufacturing parameters 152 include physical property data of the paper product PROD (e.g., speed, emboss pressure, emboss type, split, folding, toughness (tensile), number of layers (plys), specific gravity, thickness of the paper product PROD measured by the caliper, hand feeling, and other possible physical property data) and chemical property data. For example, the analysis result 220 includes the aforementioned data of all types of the fiber material FB, the single-layer paper SLP, and the paper product PROD in the manufacturer's warehouse analyzed by the analyzing unit 210.

Step S101A: Updating the paper forming corresponding function 156 according to the analysis result 220.

In one embodiment, after step S101 is performed, step S101A is performed. In step S101A, the processing unit 140 is configured to update the paper forming corresponding function 156 by using the analysis result 220 by analyzing the fiber material FB and the single-layer paper SLP composed of the fiber material FB. In detail, the processing unit 140 is configured to update the paper forming corresponding function 156 according to the physical property data and chemical property data of the single-layer paper SLP. Such updates allow the processing unit 140 to learn what are feasible paper forming recipes. For example, the analyzing unit 210 may analyze the single-layer paper SLP of competing products that the manufacturer considers to be of good quality or inferior quality, so that the processing unit 140 can learn what suggested paper forming recipe or unsuggested paper forming recipe is respectively.

Step S101B: Updating the paper manufacturing corresponding function 154 according to the analysis result 220.

In another embodiment, after step S101 is performed, step S101B is performed. In step S101B, the processing unit 140 is configured to update the paper manufacturing corresponding function 154 by using the analysis result 220 by analyzing the paper product PROD. In detail, the processing unit 140 is configured to update the paper manufacturing corresponding function 154 according to the physical property data and chemical property data of the paper product PROD. Such updates may allow the processing unit 140 to learn what feasible recipes for manufacturing the paper product PROD. For example, the analyzing unit 210 may analyze the paper products PROD of competing products that the manufacturer considers to be of good quality or inferior quality, so that the processing unit 140 can learn what the suggested processing recipe or unsuggested processing recipe is respectively.

Step S102: Performing a calculation on the analysis result 220 and the paper forming corresponding function 156 to generate a paper formation qualified score criteria.

In this embodiment, after step S101 is executed, step S102 is executed. In step S102, the processing unit 140 is configured to perform a calculation on the analysis result 220 of the analyzing unit 210 analyzing the fiber material FB and the single-layer paper SLP and the paper forming corresponding function 156. In detail, the processing unit 140 can substitute the fiber parameters related to the fiber material FB and the single-layer paper SLP (e.g., physical property data and chemical property data) into the paper forming corresponding function 156 to obtain the paper formation qualified score criteria. For example, there is a range for each different data about the fiber material FB and the single-layer paper SLP obtained in step S101 (e.g., the length set of all types of fibers is in a range between 0.77 mm and 0.95 mm). In some embodiments, the paper forming corresponding function 156 includes a weight corresponding to each of the fiber parameters described above. For example, the single-layer paper SLP configured as tissue is required to have softness and good hand feeling, so the parameters corresponding to softness and hand feeling in the paper forming corresponding function 156 (e.g., length/width ratio, length/thickness ratio, hand feeling, and other possible fiber parameters) will be assigned with larger weights. Therefore, after substituting the fiber parameters related to the fiber material FB and the single-layer paper SLP into the paper forming corresponding function 156 to perform the calculation, the aforementioned paper formation qualified score criteria will be obtained. In other words, the paper formation qualified score criteria are weighted scores.

Step S103: Performing a calculation on the input related to the paper manufacturing parameters 152 and the paper forming corresponding function 156 to generate a paper formation score.

In this embodiment, after step S102 is performed, step S103 is performed. In step S103, the input unit 120 of the evaluation apparatus of paper manufacturing 100 receives the input related to the paper manufacturing parameters 152. Specifically, before performing step S101, the user can click to input or manually input the paper manufacturing parameters 152 on the user interface 132 of the display unit 130 according to his/her preference. In some embodiments, the paper manufacturing parameters 152 include predetermined properties of the single-layer paper SLP (e.g., toughness or other possible predetermined properties). Next, the processing unit 140 performs the calculation on the input related to the paper manufacturing parameters 152 from the user and the paper forming corresponding function 156 (e.g., substituting the input related to the paper manufacturing parameters 152 into the paper forming corresponding function 156). Thereby, the processing unit 140 can generate the paper formation score through the calculation in step S103.

In some embodiments, after the input related to the paper manufacturing parameters 152 is substituted into the paper forming corresponding function 156 to perform the calculation, the "normalized score" for each of the fiber parameters in the aforementioned input will be obtained priorly. For example, for kitchen towel, the greater the roughness, the higher the normalized score obtained. For interfold tissue, the greater the roughness, the lower the normalized score obtained. Next, the paper forming corresponding function 156 multiplies the aforementioned normalized scores by the corresponding weights, and the resulting product is the paper formation score.

Step S104: Determine whether the paper formation score is in the paper formation qualified score criteria.

In this embodiment, after step S103 is performed, step S104 is performed. In step S104, the processing unit 140 is configured to determine whether the paper formation score is in the paper formation qualified score criteria. Specifically, the processing unit 140 determines whether the paper formation score generated by "the input related to the paper manufacturing parameters 152 based on the user's preference" falls within the paper formation qualified score criteria generated by "the analysis based on the fiber analysis device 200".

Step S104A: Issuing an error reminder.

In one embodiment, in step S104, when the paper formation score is determined not to be in the paper formation qualified score criteria, step S104A is performed to issue an error reminder. Step S104A is performed means that under the factors of the user's input based on his/her preferences, there is no suggested manufacturing recipe for manufacturing the single-layer paper SLP that can meet the user's expectations. For example, when the user enters "tissue" in the blank of paper type and "high toughness" in the blank of other possible predetermined property, it may cause the processing unit 140 to calculate and obtain the result "the paper formation score does not fall within the paper formation qualified score criteria". Since it is calculated that "the paper formation score does not fall within the paper formation qualified score criteria", the processing unit 140 issues an error reminder accordingly. Step S104A is performed also means that the user must re-enter the factors. In step S104A, the processing unit 140 may generate an error reminder and display it on the user interface 132 of the display unit 130, but the present disclosure is not intended to limit the approach of the error reminder and the appearance that the error reminder presents.

Step S105: Performing a calculation on the analysis result 220 and the paper manufacturing corresponding function 154 to generate a paper manufacturing qualified score criteria.

In another embodiment, when the paper formation score is determined to be in the paper formation qualified score criteria in step S104, step S105 is performed. In detail, in step S105, the processing unit 140 is configured to perform a calculation on the analysis result 220 and the paper manufacturing corresponding function 154 to generate a paper manufacturing qualified score criteria. In detail, the processing unit 140 can substitute the fiber parameters (e.g., physical property data and chemical property data) related to the paper product PROD into the paper manufacturing corresponding function 154 to obtain the paper manufacturing qualified score criteria. For example, there is a range for each different data about the paper product PROD obtained in step S101 (e.g., the set of tensile of all types of the paper product PROD is in a range between 3 and 8). In some embodiments, the paper manufacturing corresponding function 154 includes a weight corresponding to each of the fiber parameters described above. For example, the paper product PROD configured as tissue is not only required to have good hand feeling, but also expected to have flexibility to provide different choices of layers (e.g., provide double-layer, three-layer, four-layer, or more than four-layer paper), therefore the parameters corresponding to the hand feeling (e.g., length/width ratio, length/thickness ratio, hand feeling, and other possible fiber parameters) and the number of layers in the paper manufacturing corresponding function 154 will be assigned as having greater weights. Therefore, after substituting the fiber parameters related to the paper product PROD into the paper manufacturing corresponding function 154 to perform the calculation, the aforementioned paper manufacturing qualified score criteria will be obtained. In other words, the paper manufacturing qualified score criteria are weighted scores.

Step S106: Calculate the input related to the paper manufacturing parameter 152 with the paper manufacturing corresponding function 154 to generate a paper manufacturing score.

In this embodiment, after step S105 is performed, step S106 is performed. In step S106, the input unit 120 of the evaluation apparatus of paper manufacturing 100 receives the input in step S103. In detail, before performing step S101, the user can click to input or manually input the paper manufacturing parameters 152 on the user interface 132 of the display unit 130 according to his/her preference. In some embodiments, the paper manufacturing parameters 152 include paper product type (e.g., tissue or other possible paper product types), paper product predetermined property (e.g., tensile or other possible paper product predetermined property), and fiber type (e.g., long fiber, short fiber, or other possible fiber types). Next, the processing unit 140 performs the calculation on the input from the user in step S103 and the paper manufacturing corresponding function 154 (e.g., substituting the input related to the paper manufacturing parameter 152 into the paper manufacturing corresponding function 154). Thereby, the processing unit 140 can generate a paper manufacturing score through the calculation in step S106.

In some embodiments, after the input related to the paper manufacturing parameters 152 is substituted into the paper manufacturing corresponding function 154 to perform the calculation, the "normalized score" for each of the fiber parameters in the aforementioned input will be obtained priorly. For example, for both kitchen towel and interfold tissue, the greater the thickness, the higher the normalized score obtained. The greater the emboss pressure, the lower the normalized score obtained. Next, the paper manufacturing corresponding function 154 multiplies the aforementioned normalized scores by the corresponding weights, and the resulting product is the paper manufacturing score.

Step S107: Determine whether the paper manufacturing score is in the paper manufacturing qualified score criteria.

In this embodiment, after step S106 is performed, step S107 is performed. In step S107, the processing unit 140 is configured to determine whether the paper manufacturing score is in the paper manufacturing qualified score criteria. Specifically, the processing unit 140 determines whether the paper manufacturing score generated by "the input related to the paper manufacturing parameters 152 based on the user's preferences" falls within the paper manufacturing qualified score criteria generated by "the analysis based on the fiber analysis device 200".

Step S107A: Issuing an error reminder.

In one embodiment, in step S107, when the paper manufacturing score is determined not to be in the paper manufacturing qualified score criteria, step S107A is performed to issue an error reminder. Step S107A is performed means that under the factors of the user's input based on his/her preferences, although there is a suggested manufacturing recipe for manufacturing the single-layer paper SLP that can meet the user's expectations, there is no suggested manufacturing recipe for manufacturing the paper product PROD that can meet the user's expectations. For example, when the user enters "tissue" in the blank of paper type and "high strength" in the blank of other possible predetermined property, it may cause the processing unit 140 to calculate and obtain the result "the paper manufacturing score does not fall within the paper manufacturing qualified score criteria". Since it is calculated that "the paper manufacturing score does not fall within the paper manufacturing qualified score criteria", the processing unit 140 issues an error reminder accordingly. Step S107A is performed also means that even if the input related to the paper manufacturing parameters 152 from the user passes the test of step S104, it cannot pass the test of step S107. Therefore, the user still has to re-enter the factors and enable the evaluating system of paper manufacturing PMES re-performs step S102 to step S107. In step S107A, the display of the error reminder may be the same or similar to the embodiment of step S104A, but the present disclosure is not intended to limit the approach of the error reminder and the appearance that the error reminder presents.

Step S108: Generating the suggested manufacturing recipe based on the paper manufacturing score.

In another embodiment, in step S107, when the paper manufacturing score is determined to be in the paper manufacturing qualified score criteria, step S108 is performed to generate the suggested manufacturing recipe for manufacturing the paper product PROD. For example, the processing unit 140 controls the user interface 132 to display the suggested manufacturing recipe.

By the aforementioned steps of the evaluating method of paper manufacturing PMEM, the user can utilize the evaluating system of paper manufacturing PMES of the present disclosure to obtain the suggested manufacturing recipe for manufacturing the paper product PROD that meets his/her personal preferences, and optimize the evaluation mechanism of the evaluation apparatus of paper manufacturing 100 providing the suggested manufacturing recipe.

From the above detailed description of the specific embodiments of the present disclosure, it can be clearly seen that in the evaluating system of paper manufacturing and the evaluating method of paper manufacturing, the manufacturer can select the product property of the products to be produced by the evaluation apparatus of paper manufacturing, thereby obtaining the suggested manufacturing recipe for manufacturing the products to be produced. In addition, in the evaluating system of paper manufacturing and the evaluating method of paper manufacturing of the present disclosure, the manufacturer can update the paper forming corresponding function and paper manufacturing corresponding function by utilizing the analysis result of the fiber materials, the single-layer paper, and the paper product from the fiber analysis device, thus providing the manufacturer with more appropriate suggested manufacturing recipe.

In one embodiment of the present disclosure, the evaluating system of paper manufacturing PMES and the paper product manufacturing evaluation method PMEM include the application of artificial intelligence (Artificial Intelligence; AI) computing technology.

## Claims

1. An evaluating system of paper manufacturing (PMES), **characterized by** comprising:
an evaluation apparatus of paper manufacturing (100), comprising:
a database (150) storing a plurality of paper manufacturing parameters (152), a paper manufacturing corresponding function (154), and a paper forming corresponding function (156);
an input unit (120) communicatively connected to the database (150) and configured to receive an input related to the paper manufacturing parameters (152);
a processing unit (140) electrically connected to the database (150) and configured to generate a suggested manufacturing recipe by using the paper forming corresponding function (156) and the paper manufacturing corresponding function (154) according to the input; and
a communication interface (110) communicatively connected to the input unit (120) and the processing unit (140); and
a fiber analysis device (200) electrically or communicatively connected to the evaluation apparatus of paper manufacturing (100) and configured to analyze one or more fiber materials (FB), a single-layer paper (SLP), and a paper product (PROD).

2. The evaluating system of paper manufacturing as claimed in claim 1, **characterized in that** the processing unit (140) is further configured to:
receive an analysis result (220) from the fiber analysis device (200) analyzing one or more fiber materials (FB) and a single-layer paper (SLP) composed of the one or more fiber materials (FB);
update the paper forming corresponding function (156) according to the analysis result (220);
receive an analysis result (220) from the fiber analysis device (200) analyzing a paper product (PROD) composed of the one or more fiber materials (FB); and
update the paper manufacturing corresponding function (154) according to the analysis result (220).

3. The evaluating system of paper manufacturing as claimed in claim 1, **characterized in that** the evaluation apparatus of paper manufacturing (PMES) further comprises a display unit (130) electrically connected to the input unit (120) and configured to display a user interface (132).

4. The evaluating system of paper manufacturing as claimed in claim 3, **characterized in that** the display unit (130) is configured to display the paper manufacturing parameters (152) on the user interface (132).

5. The evaluating system of paper manufacturing as claimed in claim 3, **characterized in that** the processing unit (140) is further configured to:
perform a calculation on the input related to the paper manufacturing parameters (152), the paper forming corresponding function (156), and the paper manufacturing corresponding function (154).

6. The evaluating system of paper manufacturing as claimed in claim 5, **characterized in that** the calculation enables the processing unit (140) to generate the suggested manufacturing recipe based on the input, the paper forming corresponding function (156), and the paper manufacturing corresponding function (154).

7. An evaluating method of paper manufacturing (PMEM), **characterized by** comprising:
analyzing one or more fiber materials (FB) by using a fiber analysis device (200) to generate an analysis result (220), wherein the analysis result (220) is related to a plurality of paper manufacturing parameters (152), and the paper manufacturing parameters (152) comprises a paper product type, a paper product predetermined property, and a fiber type;
performing a first calculation on the analysis result (220) and a paper manufacturing corresponding function (154) to generate a paper manufacturing qualified score criteria, wherein the paper manufacturing corresponding function (154) comprises a functional relationship between the analysis result (220) and the paper manufacturing parameters (152);
updating the paper manufacturing corresponding function according to the analysis result (220);
performing a second calculation on an input related to the paper manufacturing parameters (152) and the paper manufacturing corresponding function (154) to generate a paper manufacturing score; and
determining whether the paper manufacturing score is in the paper manufacturing qualified score criteria.

8. The evaluating method as claimed in claim 7, **characterized in that** determining whether the paper manufacturing score is in the paper manufacturing qualified score criteria further comprises:
generating a suggested manufacturing recipe based on the paper manufacturing score if the paper manufacturing score is determined to be in the paper manufacturing qualified score criteria.

9. The evaluating method as claimed in claim 7, **characterized in that** determining whether the paper manufacturing score is in the paper manufacturing qualified score criteria further comprises:
issuing an error reminder if the paper manufacturing score is determined not to be in the paper manufacturing qualified score criteria.

10. The evaluating method as claimed in claim 7, **characterized in that** the analysis result (220) comprises a plurality of fiber parameters related to the one or more fiber materials (FB), the paper manufacturing qualified score criteria are weighted scores, and the paper manufacturing corresponding function (154) comprises a plurality of weights corresponding to the fiber parameters.

11. The evaluating method as claimed in claim 7, **characterized by** further comprising:
analyzing one or more paper products (PROD) by using the fiber analysis device (200) to obtain paper product physical property data and paper product chemical property data; and
updating the paper manufacturing corresponding function (154) according to the paper product physical property data and the paper product chemical property data.

12. The evaluating method as claimed in claim 7, **characterized by** further comprising:
performing a third calculation on the analysis result (220) and a paper forming corresponding function (156) to generate a paper formation qualified score criteria, wherein the paper forming corresponding function (156) comprises a functional relationship between the analysis result (220) and the paper manufacturing parameters (152), and the paper manufacturing parameters (152) further comprise a single-layer paper predetermined property;
updating the paper forming corresponding function (156) according to the analysis result (220);
performing a fourth calculation on an input related to the paper manufacturing parameters (152) and the paper forming corresponding function (156) to generate a paper formation score; and
determining whether the paper formation score is in the paper formation qualified score criteria.

13. The evaluating method as claimed in claim 12, **characterized in that** determining whether the paper formation score is in the paper formation qualified score criteria further comprises:
performing the first calculation on the analysis result (220) and the paper manufacturing corresponding function (154) to generate a paper manufacturing qualified score criteria if the paper formation score is determined to be in the paper formation qualified score criteria.

14. The evaluating method as claimed in claim 12, **characterized by** further comprising:
analyzing one or more single-layer papers (SLP) by using the fiber analysis device (200) to obtain a single-layer paper physical property data and a single-layer paper chemical property data; and
updating the paper forming corresponding function (156) according to the single-layer paper physical property data and the single-layer paper chemical property data.

15. The evaluating method as claimed in claim 12, **characterized in that** the analysis result (220) comprises a plurality of fiber parameters related to the one or more fiber materials (FB), the paper formation qualified score criteria are weighted scores, and the paper forming corresponding function (156) comprises a plurality of weights corresponding to the fiber parameters.
